(19) Europäisches Patentamt
European Patent Office
Office européen des brevets

(11) Publication number: 0 101 030 A2

# (12) EUROPEAN PATENT APPLICATION

(21) Application number: 83107745.8

(22) Date of filing: 05.08.83

(51) Int. Cl.$^3$: C 09 K 11/465

(30) Priority: 09.08.82 JP 137374/82

(43) Date of publication of application: 22.02.84 Bulletin 84/8

(84) Designated Contracting States: DE FR NL

(71) Applicant: FUJI PHOTO FILM CO., LTD.
210 Nakanuma Minamiashigara-shi
Kanagawa-ken(JP)

(72) Inventor: Umemoto, Chiyuki c/o Fuji Photo Film Co., Ltd.
No. 798, Miyanodai Kaisei-Machi
Ashigara-kami-gun Kanagawa(JP)

(72) Inventor: Takahashi, Kenji c/o Fuji Photo Film Co., Ltd.
No. 798, Miyanodai Kaisei-machi
Ashigara-kami-gun Kanagawa(JP)

(74) Representative: Patentanwälte Grünecker, Dr. Kinkeldey, Dr. Stockmair, Dr. Schumann, Jakob, Dr. Bezold, Meister, Hilgers, Dr. Meyer-Plath
Maximilianstrasse 58
D-8000 München 22(DE)

## (54) Phospor and process for the preparation of the same.

(57) A divalent europium activated barium fluorohalide phosphor having the formula (I):

$$BaFX \cdot xA{:}yEu^{2+} \quad (I)$$

in which X is at least one halogen selected from the group consisting of Cl, Br and I; A is a fired product of a tetrafluoroboric acid compound; and *x* and *y* are numbers satisfying the conditions of $10^{-6} \leq x \leq 0.1$ and $0 < y \leq 0.1$, respectively, and a process for the preparation of said phosphor.

FIG.1

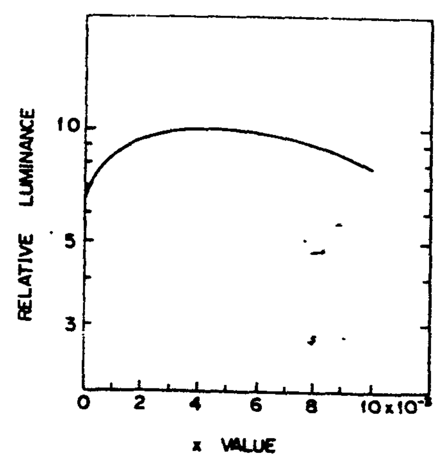


EP 0 101 030 A2

Croydon Printing Company Ltd.

0101030

# PHOSPHOR AND PROCESS FOR THE PREPARATION OF THE SAME

## BACKGROUND OF THE INVENTION

### FIELD OF THE INVENTION

The present invention relates to a phosphor and a process for the preparation of the same, and more particularly, to a divalent europium activated barium fluorohalide phosphor and a process for the preparation of the same.

### DESCRIPTION OF THE PRIOR ART

It has heretofore been known a divalent europium activated barium fluorohalide phosphor absorbs a radiation such as X-rays with high efficiency. Also it has been known that the phosphor gives an emission (spontaneous emission) in the near ultraviolet region when exposed to a radiation, and that the maximum of the emission lies at the wavelength of about 390 nm. Recently, it was discovered that the divalent europium activated barium fluorohalide phosphor is a stimulable phosphor. That is, when exposed to a radiation such as X-rays, the phosphor stores a portion of the radiation energy, and emits light in the near ultraviolet region when excited with an electromagnetic wave within a wavelength region of 450 - 850 nm after exposure to the radiation. This emission is called "stimulated emission". Because of the stimulability thereof, the divalent europium activated barium fluorohalide phosphor has been paid much attention and investigated as a phosphor for a radiation image storage panel employable in a radiation image recording and reproducing method utilizing a stimulable phosphor.

For example, Japanese Patent Provisional Publication

No. 55(1980)-12143 discloses a divalent europium activated barium fluorohalide phosphor employable for a radiation image storage panel wherein a portion of barium serving as the host component is replaced with other specific alkaline earth metals. The phosphor of the patent is expressed by the formula:

$$(Ba_{1-x-y}Mg_xCa_y)FX:aEu^{2+}$$

in which X is at least one halogen selected from the group consisting of Br and Cl; and x, y and a are numbers satisfying the conditions of $0<x+y\leqq 0.6$, $xy\neq 0$ and $10^{-6}\leqq a\leqq 5x10^{-2}$.

When a radiation image storage panel is employed for carrying out medical diagnosis, it is particularly desired that the sensitivity to a radiation of the panel is made as high as possible to decrease the exposure dose for patient and to facilitate the procedure for converting the stimulated emission to electric signals. Accordingly, it is desired that the luminance of stimulated emission of the phosphor used for the panel is as high as possible. In the case of using the phosphor for a radiographic intensifying screen utilizing the spontaneous emission thereof, also desired is that the luminance of spontaneous emission of the phosphor is as high as possible, so as to reduce the exposure dose for patient to as low level as possible.

Therefore, for the phosphor used in the radiation image storage panel enhancement in the luminance of stimulated emission thereof is desired, and likewise, for the phosphor used in the radiographic intensifying screen enhancement in the luminance of spontaneous emission thereof is desired. Especially when the radiation is applied to a human body as described above, the enhancement in the luminance of spontaneous emission or in the luminance of stimulated emission is of much value from

the viewpoint of adverse effect of the radiation on the human body, even if the level of the enhancement is not so remarkable.

## SUMMARY OF THE INVENTION

A principal object of the present invention is to provide a divalent europium activated barium fluorohalide phosphor which exhibits stimulated emission of enhanced luminance upon stimulation with an electromagnetic wave within a wavelength region of 450 - 850 nm after exposure to a radiation such as X-rays, as well as to provide a process for the preparation of the same.

Another object of the invention is to provide a divalent europium activated barium fluorohalide phosphor which exhibits spontaneous emission of enhanced luminance upon excitation with a radiation such as X-rays, as well as to provide a process for the preparation of the same.

These objects are accomplished by the phosphor and the process for the preparation of the same in accordance with the present invention.

The phosphor of the invention is a divalent europium activated barium fluorohalide phosphor having the formula (I):

$$BaFX \cdot xA:yEu^{2+} \qquad (I)$$

in which X is at least one halogen selected from the group consisting of Cl, Br and I; A is a fired product of a tetrafluoroboric acid compound; and $\underline{x}$ and $\underline{y}$ are numbers satisfying the conditions of $10^{-6} \leqq x \leqq 0.1$ and $0 < y \leqq 0.1$, respectively.

The divalent europium activated barium fluorohalide phosphor having the above-mentioned formula (I) can be prepared by a process, which comprises;

mixing raw materials for the preparation of a

phosphor in a stoichiometric ratio corresponding to the formula (II):

$$BaFX{:}yEu \qquad (II)$$

in which X and y have the same meanings as defined above;

adding to the resulting mixture a tetrafluoroboric acid compound in an amount of x mol for 1 gram atom of barium contained in the mixture; and

firing the so obtained mixture.

When stimulated with an electromagnetic wave within a wavelength region of 450 - 850 nm after exposure to a radiation such as X-rays, ultraviolet rays or cathode rays, the divalent europium activated barium fluorohalide phosphor having the formula (I) of the invention exhibits stimulated emission of prominently higher luminance than that exhibited by the known divalent europium activated barium fluorohalide phosphors.

In addition, when exposed to a radiation such as X-rays, ultraviolet rays or cathode rays, the divalent europium activated barium fluorohalide phosphor having the formula (I) of the present invention also exhibits spontaneous emission of higher luminance in the near ultraviolet region than that exhibited by the known divalent europium activated barium fluorohalide phosphor.

## BRIEF DESCRIPTION OF THE DRAWING

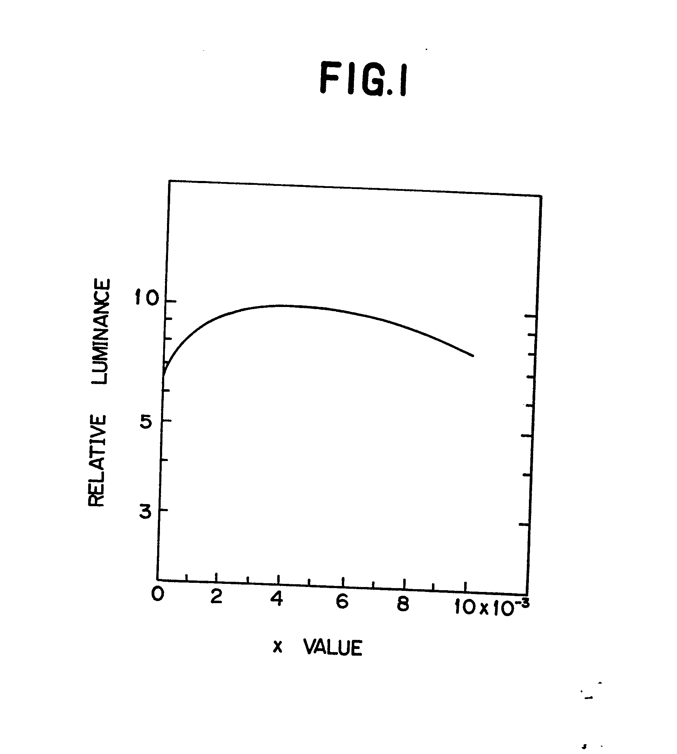

Fig. 1 shows a relationship between the luminance of stimulated emission of the phosphor of the present invention expressed by the following formula upon stimulation with an He-Ne laser (oscillation wavelength: 632.8 nm) after exposure to X-rays at 80 KVp, and the content of the fired product of sodium tetrafluoroborate contained in the phosphor (x value);

$$BaFBr \cdot xA:0.001Eu^{2+}$$

in which A is a fired product of $NaBF_4$.

## DETAILED DESCRIPTION OF THE INVENTION

The divalent europium activated barium fluorohalide phosphor of the present invention can be prepared, for instance, by a process described below.

As the starting materials, the following materials can be employed:

(1) $BaF_2$ (barium fluoride);

(2) at least one barium halide selected from the group consisting of $BaCl_2$, $BaBr_2$ and $BaI_2$;

(3) at least one europium halide selected from the group consisting of $EuCl_3$, $EuBr_3$ and $EuI_3$; and

(4) a tetrafluoroboric acid compound.

The above-mentioned tetrafluoroboric acid compound (4) is preferably at least one tetrafluoroborate selected from the group consisting of $NaBF_4$, $KBF_4$ and $NH_4BF_4$. That is because these compounds are easily available and chemically stable, and further these compounds neither absorb the light emitted by the resulting phosphor nor themselves exhibit emissions.

In the process for the preparation of the phosphor of the invention, the above-mentioned barium fluoride (1), the barium halide (2) and the europium halide (3) are, in the first place, mixed in the stoichiometric ratio corresponding to the formula (II):

$$BaFX:yEu \qquad (II)$$

in which X is at least one halogen selected from the group consisting of Cl, Br and I; and y is a number, satisfying the condition of $0 < y \leq 0.1$.

The mixing procedure is generally carried out in the

form of a suspension using distilled water. The distilled water contained in the suspension is then removed to obtain a dry cake. The removal of the distilled water is preferably carried out at room temperature or not so high temperature (for example, not higher than 200$^{o}$C) under reduced pressure, or under vacuum, otherwise under reduced pressure and subsequently under vacuum. The so obtained dry mixture is pulverized finely by means of a mortar or the like. To the pulverized mixture is added the above-mentioned tetrafluoroboric acid compound (4) in an amount of x mol (x is a number satisfying the condition of $10^{-6} \leqq x \leqq 0.1$) for 1 gram atom of barium contained in the above-mentioned dry mixture, and these are then mixed well to obtain a mixture of the starting materials for the phosphor containing the tetrafluoroboric acid compound.

In the phosphor of the invention having the formula (I), the above-mentioned x and y preferably are numbers satisfying the conditions of $10^{-5} \leqq x \leqq 10^{-2}$ and $10^{-5} \leqq y \leqq 10^{-2}$, respectively, from the viewpoint of enhancement in the luminance of stimulated emission or in the luminance of spontaneous emission.

Then, the mixture of the starting materials is placed in a heat-resistant container such as a quartz boat, an alumina crusible or a quartz crusible, and fired in an electric furnace. The temperature for the firing suitably ranges from 600 to 1000$^{o}$C. The firing period is determined depending upon the amount of the mixture of the starting materials charged in the heat-resistant container, the firing temperature, etc., and generally ranges from 0.5 to 12 hours. As the firing atmosphere, there can be employed a weak reducing atmosphere such as a nitrogen gas atmosphere containing a small amount of hydrogen gas or a carbon dioxide gas atmosphere containing carbon monoxide gas. In the firing stage, the trivalent europium contained in the mixture is reduced

into divalent europium by the weak reducing atmosphere.

The product obtained by firing conducted under the above-mentioned conditions is taken out of the furnace, allowed to stand for cooling, and pulverized. The pulverized product may be again placed in the heat-resistant container and fired in the electric furnace. In the second firing, the temperature of the firing suitably ranges from 500 to 800°C and the firing period suitably ranges from 0.5 to 12 hours. For carrying out the second firing, there can be employed an inert atmosphere such as a nitrogen gas atmosphere or an argon gas atmosphere, as well as the above-mentioned weak reducing atmosphere.

After the firing is complete, the fired product is finely pulverized to obtain a powdery phosphor of the invention. The powdery phosphor thus obtained may be processed in a conventional manner involving a variety of procedures for the preparation of phosphors such as a washing procedure, a drying procedure and a sieving procedure.

The phosphor of the present invention prepared in accordnace with the above-mentioned process is a divalent europium activated barium fluorohalide phosphor having the formula (I):

$$BaFX{\cdot}xA{:}yEu^{2+} \qquad (I)$$

in which X, x and y have the same meanings as defined above; and A is a fired product of a tetrafluoroboric acid compound.

With respect to the phosphor of the present invention having the formula (I), there is observed a certain relationship between the x value, namely the content of the fired product of the tetrafluoroboric acid compound, and the emission luminance in terms of relative value, namely the relative luminance. This relationship is

illustrated graphically in Fig. 1.

More in detail, Fig. 1 shows a relationship between the luminance of stimulated emission of the phsphor of the invention upon stimulation with an He-Ne laser (oscillation wavelength: 632.8 nm) after exposure to X-rays at 80 KVp, and the content of the fired product of sodium tetrafluoroborate contained in the phosphor, that is, the x value corresponding to the amount of sodium tetrafluoroborate added to the raw materials for the phosphor, the relationship being observed for the following phosphor;

$$BaFBr \cdot xA:0.001Eu^{2+}$$

in which A is a fired product of $NaBF_4$.

As is clear from Fig. 1, the luminance of stimulated emission of the divalent europium activated barium fluorobromide phosphor increases with increase of the x value in the case where the content of the fired product of sodium tetrafluoroborate is within the specific range. The emission luminance reaches the maximum when the content (x value) is approximately $3.3x10^{-3}$ (the amount of sodium tetrafluoroborate added to the raw materials: expressed by numbers of mol per 1 gram atom of barium contained in the phosphor).

It is further noted that the emission luminance decreases with increase of the x value as from approximately $3.3x10^{-3}$, and in the case where the x value reaches approximately 0.1, the emission luminance reaches in the vicinity of the luminance shown in the case of x = 0.

A similar relationship between the content and the luminance of stimulated emission is also observed on the other phosphors of the present invention in which A is replaced with a fired product of the other aforementioned tetrafluoroboric acid compound. Also, a similar relationship between the x value and the emission luminance is observed with respect to the spontaneous emission of the phosphor of the present invention.

The phosphor of the present invention, as described above, exhibits emission of enhanced luminance upon stimulation with an electromagnetic wave within a wavelength region of 450 - 850 nm after exposure to a radiation such as X-rays, as compared with the known divalent europium activated barium fluorohalide phosphors. The phosphor of the present invention also exhibits spontaneous emission of enhanced luminance upon excitation with a radiation such as X-rays, as compared with the known divalent europium activated barium fluorohalide phosphors. Accordingly, the phosphor of the invention is very useful as a phosphor for a radiation image storage panel, and also as a phosphor for a radiographic intensifying screen.

The present invention will be illustrated by the following examples, but these examples by no means restrict the invention.

Example 1

To 500 cc. of distilled water ($H_2O$) were added 175.34 g. of barium fluoride ($BaF_2$), 333.18 g. of barium bromide ($BaBr_2 \cdot 2H_2O$) and 0.783 g. of europium bromide ($EuBr_3$), and they were mixed to obtain a suspension. The suspension was dried at 60°C under reduced pressure for 3 hours and further dried at 150°C under vacuum for another 3 hours. The dried product was finely pulverized using a mortar. To the pulverized product was then added 0.72 g. of sodium tetrafluoroborate ($NaBF_4$), and they were mixed to obtain a homogeneous mixture of the starting materials for the preparation of a phosphor.

The mixture thus obtained was placed in an alumina crusible, which was, in turn, placed in a high-temperature electric furnace. The mixture was then fired at 900°C for 1.5 hours under a carbon dioxide atmosphere containing carbon monoxide. After the firing was complete, the crusible was taken out of the furnace and allowed to stand for cooling. The fired product was pulverized, placed in the alumina crusible again, and then fired at 600°C for 1 hour under a nitrogen gas atmosphere (second firing). After the second firing was complete, the fired product was allowed to stand for cooling and pulverized finely to obtain a divalent europium activated barium fluorobromide phosphor powder ($BaFBr \cdot 3.3X10^{-3}A:0.001Eu^{2+}$, in which A was a fired product of $NaBF_4$).

## Example 2

The same amounts of barium fluoride, barium bromide, europium bromide and distilled water as employed in Example 1 were mixed to prepare a suspension. The suspension was dried and pulverized in the same manner as described in Example 1. To the pulverized product was then added 0.072 g. of sodium tetrafluoroborate ($NaBF_4$), and they were mixed to obtain a homogeneous mixture of the starting materials for the preparation of a phosphor.

The procedure of Example 1 was repeated except for using the prepared mixture to obtain a divalent europium activated barium fluorobromide phosphor powder ($BaFBr \cdot 3.3X10^{-4}A:0.001Eu^{2+}$, in which A was a fired product of $NaBF_4$).

## Example 3

The same amounts of barium fluoride, barium bromide, europium bromide and distilled water as employed in Example 1 were mixed to prepare a suspension. The suspension was dried and pulverized in the same manner as described

in Example 1. To the pulverized product was then added 2.16 g. of sodium tetrafluoroborate ($NaBF_4$), and they were mixed to obtain a homogeneous mixture of the starting materials for the preparation of a phosphor.

The procedure of Example 1 was repeated except for using the prepared mixture to obtain a divalent europium activated barium fluorobromide phosphor powder ($BaFBr \cdot 9.9X10^{-3}A:0.001Eu^{2+}$, in which A was a fired product of $NaBF_4$).

## Comparison Example 1

The same amounts of barium fluoride, barium bromide, europium bromide and distilled water as employed in Example 1 were mixed to prepare a suspension. The suspension was dried and pulverized in the same manner as described in Example 1 to obtain a pulverized mixture of the starting materials for the preparation of a phosphor.

The procedure of Example 1 was repeated except for using the prepared mixture to obtain a divalent europium activated barium fluorobromide phosphor powder ($BaFBr:0.001Eu^{2+}$).

The phosphors prepared in Examples 1 through 3 and Comparison Example 1 were stimulated with an He-Ne laser (oscillation wavelength: 632. 8 nm) after exposure to X-rays at 80 KVp, to evaluate the luminance of stimulated emission thereof.

The results on the evaluation of the phosphors are set forth in Table 1.

Table 1

| | | x Value | Relative Luminance |
|---|---|---|---|
| Example | 1 | $3.3X10^{-3}$ | 150 |
| | 2 | $3.3X10^{-4}$ | 115 |
| | 3 | $9.9X10^{-3}$ | 120 |
| Com. Example | 1 | 0 | 100 |

Example 4

To 500 cc. of distilled water ($H_2O$) were added 175.34 g. of barium fluoride ($BaF_2$), 333.18 g. of barium bromide ($BaBr_2 \cdot 2H_2O$) and 0.783 g. of europium bromide ($EuBr_3$), and they were mixed to obtain a suspension. The suspension was dried at 60°C under reduced pressure for 3 hours and further dried at 150°C under vacuum for another 3 hours. The dried product was finely pulverized using a mortar. To the pulverized product was then added 0.083 g. of potassium tetrafluoroborate ($KBF_4$), and they were mixed to obtain a homogeneous mixture.

The procedure of Example 1 was repeated except for using the prepared mixture to obtain a divalent europium activated barium fluorobromide phosphor powder ($BaFBr \cdot 3.3X10^{-4}A{:}0.001Eu^{2+}$, in which A was a fired product of $KBF_4$).

The phosphor prepared in Examples 4 was stimulated with an He-Ne laser (oscillation wavelength: 632.8 nm) after exposure to X-rays at 80 KVp, to evaluate the luminance of stimulated emission thereof.

The result on the evaluation of the phosphor is set

forth in Table 2. The aforementioned result on the evaluation of the phosphor prepared in Comparison Example 1 is also set forth in Table 2.

Table 2

| | x Value | Relative Luminance |
|---|---|---|
| Example 4 | $3.3X10^{-4}$ | 230 |
| Com. Example 1 | 0 | 100 |

Example 5

To 500 cc. of distilled water ($H_2O$) were added 175.34 g. of barium fluoride ($BaF_2$), 333.18 g. of barium bromide ($BaBr_2 \cdot 2H_2O$) and 0.783 g. of europium bromide ($EuBr_3$), and they were mixed to obtain a suspension. The suspension was dried at 60°C under reduced pressure for 3 hours and further dried at 150°C under vacuum for another 3 hours. The dried product was finely pulverized using a mortar. To the pulverized product was then added 0.070 g. of ammonium tetrafluoroborate ($NH_4BF_4$), and they were mixed to obtain a homogeneous mixture.

The procedure of Example 1 was repeated except for using prepared mixture to obtain a divalent europium activated barium fluorobromide phosphor powder ($BaFBr \cdot 3.3X10^{-4}A:0.001Eu^{2+}$, in which A was a fired product of $NH_4BF_4$).

The phosphor prepared in Examples 5 was stimulated with an He-Ne laser (oscillation wavelength: 632.8 nm) after exposure to X-rays at 80 KVp, to evaluate the

luminance of stimulated emission thereof.

The result on the evaluation of the phosphor is set forth in Table 3. The aforementioned result on the evaluation of the phosphor prepared in Comparison Example 1 is also set forth in Table 3.

Table 3

| | x Value | Relative Luminance |
|---|---|---|
| Example 5 | $3.3 \times 10^{-4}$ | 110 |
| Com. Example 1 | 0 | 100 |

CLAIMS

1. A divalent europium activated barium fluorohalide phosphor having the formula (I):

$$BaFX \cdot xA:yEu^{2+} \quad (I)$$

in which X is at least one halogen selected from the group consisting of Cl, Br and I; A is a fired product of a tetrafluoroboric acid compound; and x and y are numbers satisfying the conditions of $10^{-6} \leqq x \leqq 0.1$ and $0 < y \leqq 0.1$, respectively.

2. The phosphor as claimed in Claim 1, in which x and y are numbers satisfying the conditions of $10^{-5} \leqq x \leqq 10^{-2}$ and $10^{-5} \leqq y \leqq 10^{-2}$, respectively.

3. The phosphor as claimed in Claim 1, in which A in the formula (I) is at least one fired product of tetrafluoroborate selected from the group consisting of $NaBF_4$, $KBF_4$ and $NH_4BF_4$.

4. A process for the preparation of a divalent europium activated barium fluorohalide phosphor having the formula (I):

$$BaFX \cdot xA:yEu^{2+} \quad (I)$$

in which X is at least one halogen selected from the group consisting of Cl, Br and I; A is a fired product of a tetrafluoroboric acid compound; and x and y are numbers satisfying the conditions of $10^{-6} \leqq x \leqq 0.1$ and $0 < y \leqq 0.1$, respectively,

which comprises;

mixing raw materials for the preparation of a phosphor in a stoichiometric ratio corresponding to the formula (II):

BaFX:yEu (II)

in which X and y have the same meanings as defined above;

adding to the resulting mixture a tetrafluoroboric acid compound in an amount of x mol for 1 gram atom of barium contained in the mixture; and

firing the so obtained mixture.

1/1



FIG.1